# EUROPEAN PATENT APPLICATION

(11) **EP 0 599 502 A1**
(43) Date of publication of application: **01.06.1994**
(21) Application number: 93308769.4
(22) Date of filing: 02.11.1993
(51) Int. Cl.: B64C 21/06

(54) **Porous structure having laminar flow control and contamination protection**

(30) Priority: 27.11.1992 GB 9224849
(71) Applicant: ROLLS-ROYCE plc, London, SW1E 6AT (GB)
(72) Inventor: Rodgers, Leonard John, Spondon, Derby DE21 7LE (GB)
(74) Representative: Gunn, Michael Alan

(57) **Abstract**

The leading edge (22) of a nacelle (20) for an aero-engine (10) is porous. The porous leading edge (22) has laminar flow control and contamination protection.

At take off and landing a liquid is selectively distributed through channels (30) to regions D and F of a layer of porous material (24). The liquid permeates slowly through the pipes (32) located in the channels (30). The pipes (32) resistance to the flow of liquid therethrough causes a pressure to develop which is sufficient to dispense the liquid through the layer of porous material (24). The exuded liquid provides contamination protection at the leading edge (22) of the nacelle (20).

At cruise a chamber (36) adjacent inner surface (26) of the porous layer (24) is evacuated to selectively suck air through the porous layer (24). The suction provides laminar flow control by preventing the onset of turbulence in the boundary layer air flow passing over the nacelle (20).

## Description

The present invention relates to a porous structure which has laminar flow control and contamination protection. In particular it relates to a porous structure which forms part of an aircraft surface.

The achievement of large areas of laminar air flow over the surface of an aircraft can lead to significant drag reduction and hence fuel savings.

By reshaping the surface to achieve favourable streamwise pressure gradients, the transition from laminar to turbulent flow will be delayed and the surface has natural laminar flow. Alternatively suction can be applied to the surface to suck the boundary layer of air through pores in the surface to prevent the onset of turbulence. This is known as laminar flow control. For a given application the optimum laminar flow may require a combination of some limited reshaping and laminar flow control applied in a selective manner.

The ability of a surface to achieve and maintain laminar flow is however impaired by contamination. The primary contaminants on an aircraft surface are ice and insect debris which is entrained in the air flow. The build up of ice and insect debris on the surface can cause premature transition of the air flow from laminar to turbulent flow and can block the porous surface through which the boundary layer of air is sucked.

It is known to prevent the contamination of an aircraft surface by exuding a protective liquid from a surface which is porous. The liquid need only be exuded from a limited part of the surface as the airflow passing over the surface carries it rearwards to wash the rest of the surface.

A problem arises in combining laminar flow control and surface washing in a single surface as the porosity for suction is totally incompatible with that required for efficient control of fluid exudation. A typical suction surface will only provide about 2% of the flow resistance necessary to develop a reasonable pressure to dispense fluid from a suction surface.

The present invention seeks to provide a porous structure which can provide both laminar flow control by suction and which extrudes liquid for contamination protection.

According to the present invention a porous structure having laminar flow control and contamination protection comprises a layer of porous material having a first and a second surface, means for selectively providing suction through the layer of porous material being provided adjacent the second surface which in operation provides laminar flow control on the first surface, there being further provided means for selectively distributing a flow of liquid to at least a portion of the second surface of the layer of porous material, characterised in that the layer of material is of uniform porosity and a sheet of liquid permeable material is provided through which in operation the flow of liquid passes to the second surface, the sheet of liquid permeable material restricting the flow of liquid therethrough to develop sufficient pressure to dispense the liquid through the layer of porous material to provide contamination control on the first surface of the porous layer.

Preferably the liquid is distributed through channels adjacent the second surface of the layer of porous material. The channels may form an integral part of the layer of porous material.

The sheet of liquid permeable material is preferably located in the channels. The liquid permeable sheet may be in the form of a pipe which is located in the channels and through which in operation the liquid passes.

The layer of porous material may be made from a composite material.

The sheet of liquid permeable material may be made from plastic.

The present invention will now be described with reference to the accompanying drawings in which;

Figure 1 is a pictorial view of a engine and nacelle installation for an aircraft.

Figure 2 is a sectional view of part of the leading edge of a nacelle having an outer porous surface in accordance with the present invention.

Figure 3 is an enlarged cross-sectional view of the porous surface shown in figure 2.

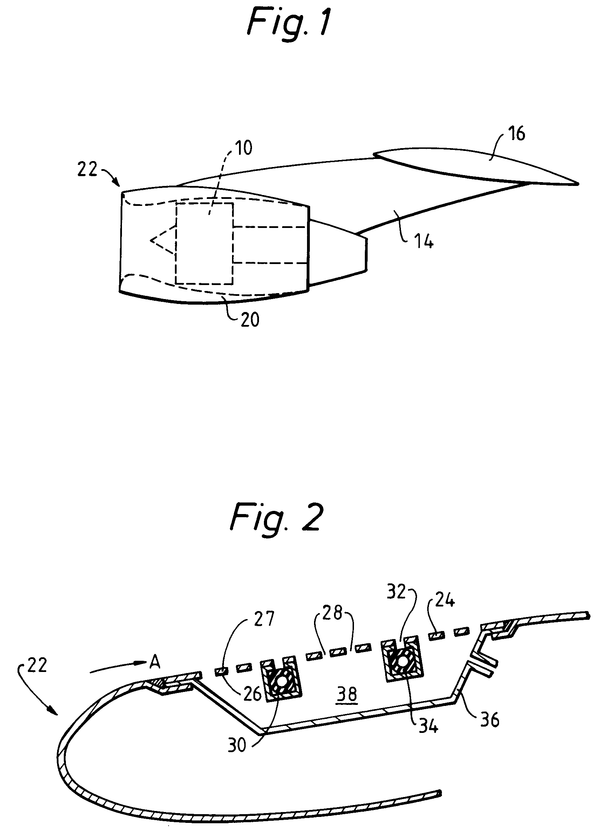

Referring to figure 1 a gas turbine engine 10 is enclosed in a nacelle 20. The engine 10 and nacelle 20 are supported in conventional manner from a pylon 14 under an aircraft wing 16.

The leading edge 22 of the nacelle 20, figure 2, comprises a layer of composite material 24 which has a plurality of apertures 28 therein. Attached to an inner surface 26 of the composite layer 24 are channels 30. The base 31 of the channels 30 have apertures 32 therein which are aligned with the apertures 28 in the composite layer 24. Located within the channels 30 are permeable plastic pipes 34 which are connected to a liquid reservoir(not shown). A backing plate 36 is attached to the inner surface 26 of the composite layer 24 to define a chamber 38 which can be evacuated by a suction pump (not shown).

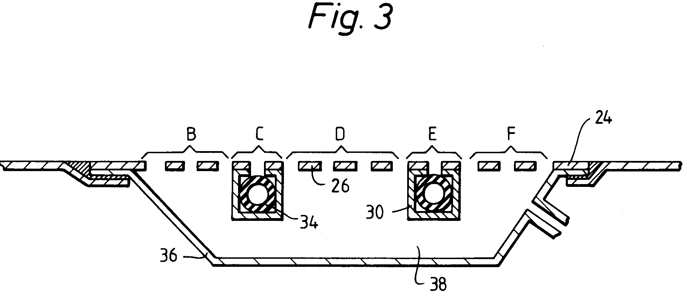

In operation as the aircraft is taking off or landing a flow of air passes over outer surface 27 of the composite layer 24 in the direction of arrow A in figure 2. Contamination of the outer surface 27, by ice or insects and debris entrained in the air needs to be prevented to maintain a laminar flow of air over the nacelle. Contamination is prevented by pumping a liquid through the plastic pipes 34 located in the channels 30. The liquid slowly permeates through the pipes 34. The plastic pipes 34 offer sufficient resistance to the liquid that a pressure develops which is sufficient to dispense the liquid through the apertures 32 in the base 32 of the channels 30 and the corresponding apertures 28 in the composite layer 24. The liquid is dispensed from regions C and E of the composite layer 24, figure 3, and is passed rearwards by the airflow to wash the outer surface 27 of the composite layer 24.

When the aircraft is operating at cruise laminar flow control is required at the leading edge 22 of the nacelle 20. The chamber 38 is evacuated by a suction pump (not shown) and the boundary layer of the airflow is sucked through the composite layer 24 in the regions B,D and F, figure 3. By sucking the boundary layer through the apertures 28 in the composite layer 24 the onset of turbulence in the air flow passing over the leading edge 22 of the nacelle 20 is prevented.

As laminar flow control and contamination protection are required at different times on the leading egde 22 of the nacelle 20 the suction of air and the effusion effusion of liquid through the apertures 28 and 31 are selectively controlled by valves (not shown).

Although the present invention has been described with reference to a nacelle 20 for an aircraft engine 10 it will be appreciated by one skilled in the art that a porous structure in accordance with the present invention could have other applications. In particular it could be used to produce aircraft wings and other parts of the fuselage where aerodynamic drag is to be minimised.

Materials other than composites may be used and the pattern and spacing of the apertures 28 may be varied to suit a particular application of the porous structure.

## Claims

1. A porous structure, having laminar flow control and contamination protection, comprising a layer of porous material (24) having a first surface (27) and a second surface (26), means for selectively providing suction through the layer of porous material (24) being provided adjacent the second surface (26) which in operation provides laminar flow control on the first surface (27), there being further provided means (30) for selectively distributing a flow of liquid to at least a portion of the second surface (26) of the layer of porous material (24), characterised in that the layer of material (24) is of uniform porosity and a sheet of liquid permeable material (34) is provided through which in operation the flow of liquid passes to the second surface (27), the sheet of liquid permeable material (34) restricting the flow of liquid therethrough to develop sufficient pressure to dispense the liquid through the layer of porous material (24), the liquid exuding over the first surface (27) to provide contamination protection.

2. A porous structure as claimed in claim 1 characterised in that the means for distributing the liquid are channels (30) adjacent the second surface (26) of the layer of porous material (24).

3. A porous structure as claimed in claim 2 characterised in that the channels (30) form an integral part of the second surface (26) of the layer of porous material (24).

4. A porous structure as claimed in claim 2 or claim 3 characterised in that the sheet of liquid permeable (34) material is located in the channels (30).

5. A porous structure as claimed in claim 4 characterised in that the sheet of liquid permeable material (34) is in the form of a pipe.

6. A porous structure as claimed in any preceding claim characterised in that the layer of porous material (24) is made from a composite material.

7. A porous structure as claimed in any preceding claim characterised in that the sheet of liquid permeable material (34) is made from plastic.

8. A porous structure as claimed in any preceding claim chararacterised in that it is for use in the nacelle (20) of an aircraft engine (10).

9. A porous structure as claimed in any of claims 1-7 characterised in that is for use in the fuselage of an aircraft.
